# FASCICULE DE BREVET EUROPEEN

(11) **EP 4 228 965 B1**
(45) Date de publication et mention de la délivrance du brevet: **24.06.2026**
(21) Numéro de dépôt: 21794131.9
(22) Date de dépôt: 14.10.2021
(51) Int. Cl.: B64C 25/12

(54) **ATTERRISSEUR D'AERONEF EQUIPE D'UN DISPOSITIF DE VERROUILLAGE A RESSORT A LAME**
FLUGZEUGFAHRWERK MIT EINER BLATTFEDERVERRIEGELUNGSVORRICHTUNG
AIRCRAFT LANDING GEAR PROVIDED WITH A LEAF SPRING LOCKING DEVICE

(30) Priorité: 14.10.2020 FR 2010523
(43) Date de publication de la demande: 23.08.2023
(73) Titulaire: Safran Landing Systems, 78140 Vélizy-Villacoublay (FR)
(72) Inventeur: CASTELLAN, Clément, 77550 Moissy-Cramayel (FR); CAPURRO, Matteo, 77550 Moissy-Cramayel (FR); BLANPAIN, Thierry, 77550 Moissy-Cramayel (FR); NGUYEN, Nicolas, 77550 Moissy-Cramayel (FR)
(74) Mandataire: Cabinet Boettcher
(86) Numéro de dépôt international: PCT/EP2021/078485
(87) Numéro de publication internationale: WO 2022/079187

(56) Documents cités:
- EP-A1- 1 988 015
- EP-A1- 2 437 978
- EP-A1- 3 069 993
- EP-A1- 3 100 948
- EP-A2- 0 026 689
- EP-A2- 2 265 493
- EP-A2- 2 571 760

## Description

La présente invention concerne le domaine des trains d'atterrissage et plus particulièrement les moyens permettant de verrouiller l'atterrisseur en position déployée.

### ARRIERE PLAN DE L'INVENTION

On connaît, par exemple du document EP 3 069 993, des atterrisseurs d'aéronef comprenant une jambe montée mobile sur la structure d'un aéronef entre une position déployée (pour le décollage et l'atterrissage) et une position rétractée (pour le vol) sous l'action d'un actionneur de manœuvre.

La jambe est maintenue dans la position déployée par une contrefiche briseuse qui est attelée à la jambe et à la structure de l'aéronef, et qui comporte deux bielles articulées entre elles et maintenues en position alignée par un organe de stabilisation.

L'organe de stabilisation comprend deux biellettes articulées entre elles et maintenues en position sensiblement alignée par un organe de verrouillage passif afin d'empêcher le désalignement de la contrefiche.

En général, l'organe de verrouillage comporte un ou plusieurs ressorts hélicoïdaux ayant des extrémités reliées à la contrefiche et à l'organe de stabilisation pour exercer un effort de traction sur ledit organe de stabilisation et ainsi empêcher le désalignement des biellettes.

Il est courant que l'atterrisseur soit agencé pour se déplacer par gravité de la position rétractée vers la position déployée en cas de défaillance de l'actionneur de manœuvre. Les ressorts hélicoïdaux sont généralement prévus pour aider le déplacement de l'atterrisseur vers la position déployée et à le verrouiller dans cette position.

Cela étant, les ressorts hélicoïdaux s'opposent à l'action de l'actionneur de manœuvre lors du relevage de l'atterrisseur et leur comportement linéaire implique des efforts supplémentaires importants à contrer lors du déplacement de l'atterrisseur vers la position rétractée pour lesquels l'actionneur de manœuvre doit être dimensionné.

Qui plus est, les ressorts hélicoïdaux s'avèrent coûteux et relativement lourds.

### OBJET DE L'INVENTION

L'invention a donc pour but de proposer un atterrisseur d'aéronef permettant d'obvier au moins en partie aux inconvénients précités.

### RESUME DE L'INVENTION

A cet effet, l'invention propose un atterrisseur d'aéronef comprenant :
- une jambe agencée pour être montée mobile sur une structure d'aéronef entre une position déployée et une position rétractée ;
- au moins un organe de contreventement pour maintenir la jambe dans la position déployée, comportant une première bielle articulée sur la structure d'aéronef et une deuxième bielle articulée sur la première bielle et sur la jambe ;
- un organe de stabilisation pour maintenir les première et deuxième bielles en position alignée, comportant une première biellette et une deuxième biellette articulées entre elles et dont l'une au moins est articulée sur l'organe de contreventement ; et
- au moins un ressort pour rappeler élastiquement en position généralement alignée les articulations des première et deuxième biellettes.

Le ressort est un ressort à lame agencé pour être élastiquement soumis à un effort de compression axiale lorsque les articulations des première et deuxième biellettes quittent leur position généralement alignée.

Selon l'invention, le ressort a une première extrémité (7.1) montée à pivotement sur la première bielle ou la deuxième bielle, et une seconde extrémité (7.2) montée à pivotement sur l'organe de stabilisation

La compression axiale de la lame provoque son flambement de sorte que l'effort à fournir pour briser l'alignement des biellettes évolue peu pendant le flambement de la lame. Ce comportement du ressort à lame permet, lors du déploiement de l'atterrisseur, d'obtenir au bout d'une faible course un effort suffisant pour assurer le verrouillage de l'atterrisseur en position déployée, et lors du relevage de l'atterrisseur, de limiter les efforts que doit contrer l'actionneur de manœuvre.

Par ailleurs, un tel organe de verrouillage s'avère peu onéreux à produire et est relativement léger.

De manière particulière, le ressort à lame est monté à pivotement sur la première bielle et sur l'organe de stabilisation.

De manière particulière encore, le ressort à lame est monté à pivotement sur la deuxième bielle et sur l'organe de stabilisation.

Selon une caractéristique particulière, le ressort à lame est une plaque de métal d'épaisseur sensiblement constante.

Selon une autre caractéristique particulière, l'atterrisseur comprend deux ressorts à lames pour fournir une redondance en cas de défaillance de l'un des deux ressorts à lame.

De manière particulière, les deux ressorts à lames sont sensiblement identiques et sont montés à pivotement sur la première bielle et sur l'organe de stabilisation.

De manière particulière, les deux ressorts à lames sont sensiblement identiques et sont montés à pivotement sur la deuxième bielle et sur l'organe de stabilisation.

De manière particulière, l'un des ressorts à lame est monté à pivotement sur la première bielle et sur l'organe de stabilisation, et l'autre des ressorts à lame est monté à pivotement sur la deuxième bielle et sur l'organe de stabilisation.

De manière particulière, la première biellette est articulée sur la jambe et la deuxième biellette est articulée sur l'organe de contreventement.

De manière particulière, la première biellette est articulée sur la deuxième bielle et la deuxième biellette est articulée sur la première bielle.

L'invention concerne également un aéronef comprenant au moins un tel atterrisseur.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
- la figure 1a est une vue schématique d'un atterrisseur d'aéronef selon un premier mode de réalisation de l'invention, représenté en position déployée ;
- la figure 1b est une vue analogue à la figure 1a montrant l'atterrisseur dans une position déverrouillée ;
- la figure 1c est une vue analogue à la figure 1a montrant l'atterrisseur dans une position intermédiaire au début de la phase de relevage ;
- la figure 2 est un graphique illustrant l'effort de compression produit par le ressort à lame en fonction de son déplacement ;
- la figure 3 est une vue analogue à la figure 1, représentant un atterrisseur d'aéronef selon un deuxième mode de réalisation de l'invention ;
- la figure 4 est une vue analogue à la figure 1, représentant un atterrisseur d'aéronef selon un troisième mode de réalisation de l'invention ;
- la figure 5 est une vue en perspective d'une partie d'un atterrisseur selon un quatrième mode de réalisation de l'invention ;
- la figure 6 est une vue schématique de l'organe de verrouillage de l'atterrisseur illustré à la figure 5.

### DESCRIPTION DETAILLEE DE L'INVENTION

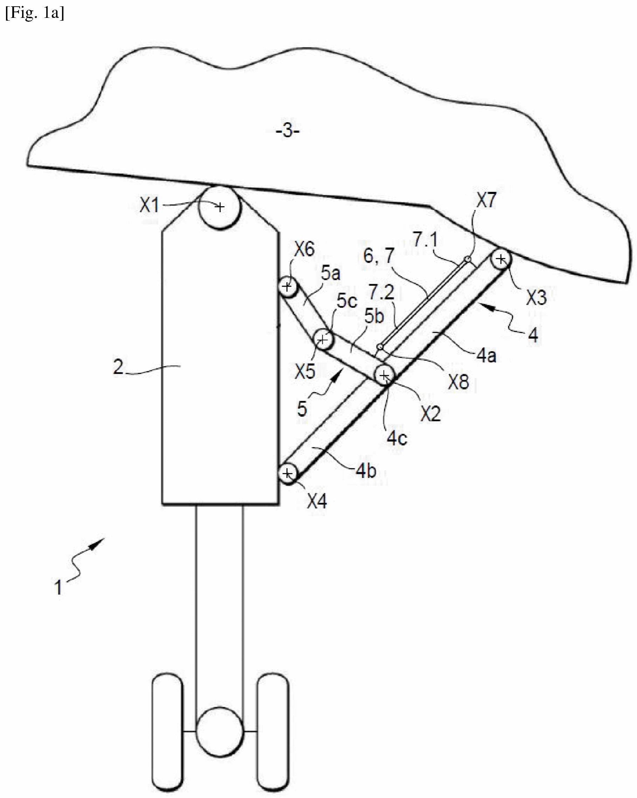

En référence aux figures 1a à 1d, un atterrisseur 1 d'aéronef comprend de façon connue en soi une jambe 2 ayant une première extrémité articulée à une structure 3 d'un aéronef selon un axe X1 d'articulation pour que la jambe 2 soit mobile entre une position déployée (figure 1a) et une position rétractée sous l'action d'un actionneur de manœuvre (non représenté), par exemple un vérin hydraulique. La jambe 2 comprend une extrémité opposée (non visible sur les figures) portant un essieu sur lequel une ou plusieurs roues sont montées pour pivoter.

Une contrefiche briseuse 4 est articulée, d'une part, sur la jambe 2 et, d'autre part, sur la structure 3 de l'aéronef et forme un organe de contreventement pour maintenir la jambe 2 dans la position déployée. La contrefiche 4 comprend deux bielles 4a, 4b, articulées entre elles, au niveau d'un genou 4c, selon un axe X2 d'articulation. La bielle 4a est par ailleurs articulée sur la structure 3 de l'aéronef selon un axe X3 d'articulation, tandis que la bielle 4b est articulée sur la jambe 2 selon un axe X4 d'articulation.

La contrefiche briseuse 4 est stabilisée en position sensiblement alignée au moyen d'un organe de stabilisation 5 comportant deux biellettes 5a, 5b, également articulées entre elles au niveau d'un genou 5c selon un axe X5 d'articulation. La biellette 5a est articulée sur la jambe 2 selon un axe d'articulation X6, et la biellette 5b est articulée sur la contrefiche briseuse 4 selon l'axe X2. Les biellettes 5a, 5b sont maintenues en position sensiblement alignée par un organe de verrouillage 6 rappelant les biellettes 5a, 5b vers la position verrouillée illustrée à la figure 1a et définie par des butées entre les biellettes 5a, 5b.

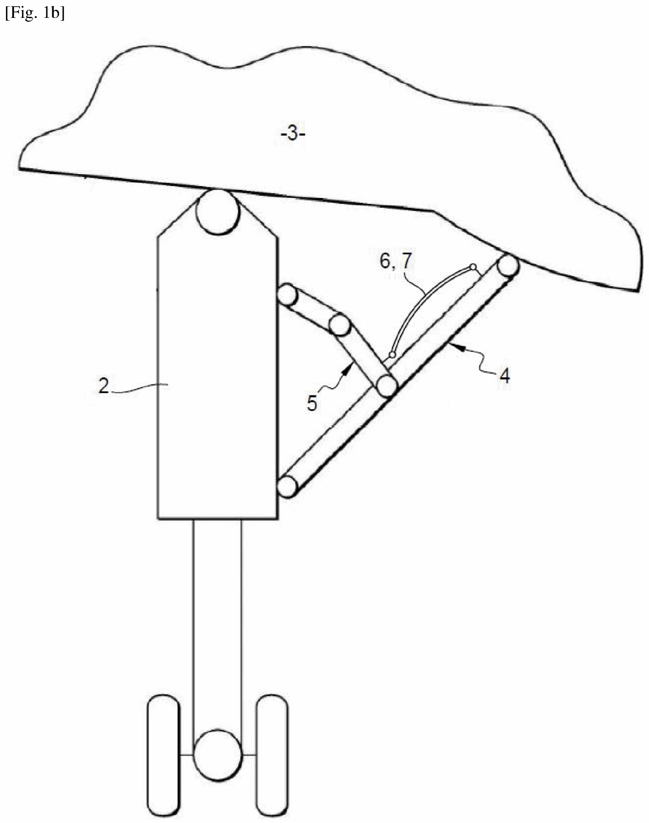

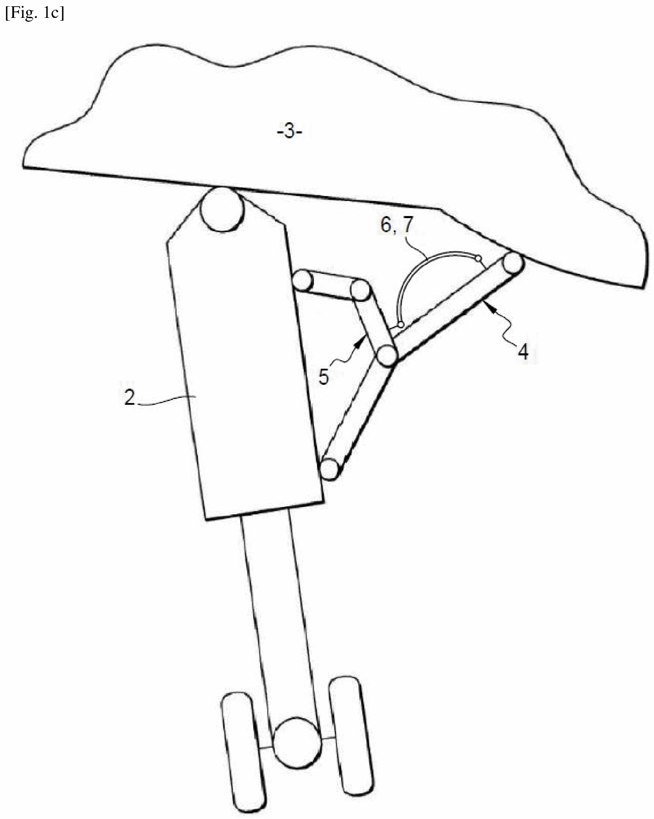

Ainsi stabilisée en position sensiblement alignée, la contrefiche briseuse 4 s'oppose à toute rotation de la jambe 2 autour de son axe d'articulation X1, de sorte que la position déployée illustrée à la figure 1a est une position stable. Comme cela est bien connu, les bielles 4a, 4b et les biellettes 5a, 5b sont conçues de manière à ce que pour arriver à la position verrouillée illustrée à la figure 1, le genou 4c d'articulation des bielles 4a, 4b et le genou 5c d'articulation des biellettes 5a, 5b passent légèrement au-delà de l'alignement géométrique des bielles 4a, 4b et biellettes 5a, 5b. De manière connue en elle-même, les articulations sont agencées pour éviter un hyperstatisme, par exemple au moyen de jeux de fonctionnement ou d'au moins une liaison rotule.

L'organe de verrouillage 6 comporte un ressort pour maintenir élastiquement les biellettes 5a, 5b en position sensiblement alignée. Selon l'invention, ce ressort comprend ici une lame 7 métallique de forme allongée qui s'étend le long de la bielle 4a. La lame 7 présente une épaisseur et une largeur globalement constantes, la largeur s'étendant sensiblement selon les axes X1-X6 d'articulation et étant supérieure à l'épaisseur. Par exemple, la lame 7 a une longueur égale à 800 millimètres, une largeur égale à 50 millimètres et une épaisseur égale à 3,5 millimètres.

La lame 7 comprend une première extrémité 7.1 montée à pivotement sur la bielle 4a selon un axe X7 de pivotement situé à proximité de l'axe X3 d'articulation de la bielle 4a, et une deuxième extrémité 7.2 montée à pivotement sur l'organe de stabilisation 5 selon un axe X8 de pivotement à proximité de l'axe X2 d'articulation du genou 4c. Ainsi, lorsque la jambe 2 est dans sa position déployée, la lame 7 est dans un état déformé voisin de son état de repos et l'extrémité 7.1 est éloignée de l'extrémité 7.2 d'une première distance ; lorsque la jambe 2 est dans sa position repliée, la lame 7 a flambé et est dans un état déformé et l'extrémité 7.1 est éloignée de l'extrémité 7.2 d'une deuxième distance inférieure à la première distance. C'est le repliement de l'organe de verrouillage 6 qui provoque le rapprochement des extrémités 7.1 et 7.2 l'une de l'autre et donc le flambement de la lame 7. La lame 7 travaille ainsi élastiquement en compression et a tendance à revenir vers son état de repos, les extrémités 7.1, 7.2 tendant à s'écarter l'une de l'autre jusqu'à la première distance.

A cet effet, la lame 7 est sensiblement droite lorsque les biellettes 5a, 5b sont en position verrouillée (figure 1a), et prend une forme arquée lorsque la biellette 5b pivote selon l'axe X2 (figures 1b et 1c).

La lame 7 forme ainsi un ressort à lame appliquant sur la biellette 5b un effort P pour amener les biellettes 5a, 5b en position sensiblement alignée.

En référence aux figures 1b et 1c, l'actionneur de manœuvre est dimensionné pour briser l'alignement des biellettes 5a, 5b en contrant l'effort P exercé par la lame 7 résistant à son propre flambement. La remontée du genou 5c engendre le désalignement des bielles 4a, 4b, ce qui provoque la remontée du genou 4c et donc le pivotement de la jambe 2 vers la position rétractée (figures 1b et 1c).

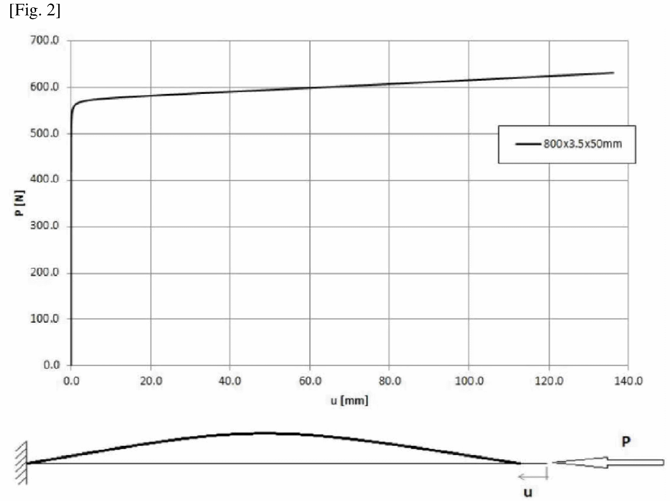

Comme illustré à la figure 2, l'effort P engendré par la lame 7 après une faible déformation U est suffisant pour assurer le maintien des biellettes 5a, 5b en position verrouillée. Par ailleurs, l'effort P n'évolue que très peu au fur et à mesure que la déformation U augmente, notamment comparé au comportement linéaire des ressorts hélicoïdaux. Ainsi, lorsque la jambe 2 passe de la position déployée à la position rétractée, l'effort P produit par la lame 7 est limité, ce qui limite les efforts que doit contrer l'actionneur de manœuvre pour relever l'atterrisseur 1. Qui plus est, le ressort à lame formé par la lame 7 s'avère moins onéreux et relativement plus léger.

On notera que la position de la lame 7 sur la contrefiche briseuse 4 se doit d'être différente de celle des ressorts hélicoïdaux, la lame 7 étant agencée pour travailler exclusivement en compression et non fréquemment en traction.

Les principaux paramètres nécessaires au dimensionnement de la lame 7 sont :
- l'effort nécessaire au maintien des biellettes 5a, 5b en position sensiblement alignée ;
- les caractéristiques mécaniques du matériau dans lequel est réalisée la lame 7 (limite conventionnelle élastique Rp0,2, module de Young E, courbe de fatigue...) ;
- la déformation maximum de la lame 7 lors du déploiement et de la rétraction de la jambe 2, notamment pour garantir la tenue mécanique de ladite lame 7 ; et
- le flambement maximum de la lame lors du déploiement et de la rétraction de la jambe 2, notamment pour limiter l'encombrement de la lame 7 pendant toute la cinématique de rentrée/sortie de la jambe 2.

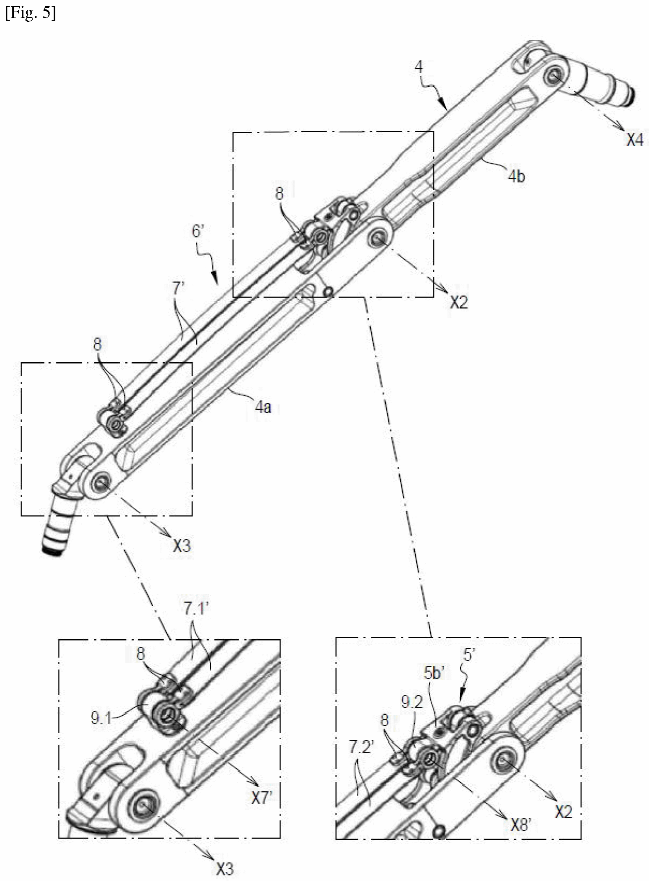

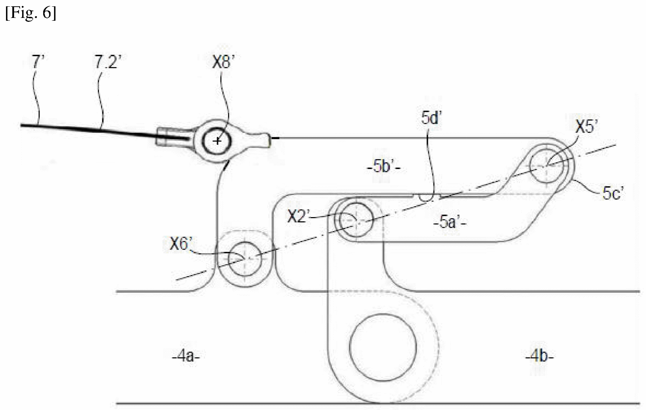

La figure 5 illustre un autre mode de réalisation de l'invention dans lequel l'atterrisseur 1 comprend un organe de stabilisation 5' dont le montage est dit « interne » pour maintenir les première et deuxième bielles 4a, 4b en position alignée. L'organe de stabilisation 5' comprend deux biellettes 5a', 5b', articulées entre elles au niveau d'un genou 5c' selon un axe X5' d'articulation. La biellette 5a' est articulée sur la bielle 4b selon un axe X2'et la biellette 5b' est articulée sur la bielle 4a selon un axe d'articulation X6'. Les axes X2', X5', X6' d'articulation des biellettes 5a', 5b' sont maintenus en position sensiblement alignée par un organe de verrouillage 6' rappelant les biellettes 5a', 5b' vers la position verrouillée illustrée à la figure 6 et définie par une butée 5d' entre les biellettes 5a', 5b'.

Ainsi stabilisée en position sensiblement alignée, la contrefiche briseuse 4 s'oppose à toute rotation de la jambe 2 autour de son axe d'articulation X1. Comme cela est bien connu, les biellettes 5a', 5b' sont conçues de manière à ce que pour arriver à la position verrouillée illustrée à la figure 6, l'axe X2' d'articulation de la biellette 5a' passent légèrement au-delà de l'alignement géométrique des axes X2', X5', X6' d'articulation. De manière connue en elle-même, les articulations sont agencées pour éviter un hyperstatisme, par exemple au moyen de jeux de fonctionnement ou d'au moins une liaison rotule.

En référence à la figure 5, l'organe de verrouillage 6' comporte un ressort pour maintenir élastiquement les axes X2', X5', X6' d'articulation des biellettes 5a', 5b' en position sensiblement alignée. Ce ressort comprend ici deux lames 7' métalliques de forme allongée qui s'étendent parallèlement l'une par rapport à l'autre le long de la bielle 4a. Les lames 7' sont identiques et présentent une épaisseur et une largeur globalement constantes, la largeur s'étendant sensiblement selon les axes X1-X4 d'articulation et étant supérieure à l'épaisseur.

Les lames 7' comprennent des premières extrémités 7.1' montées à pivotement sur la bielle 4a selon un même axe X7' de pivotement situé à proximité de l'axe X3 d'articulation de la bielle 4a, et des deuxièmes extrémités 7.2' montées à pivotement sur la biellette 5b' selon un même axe X8' de pivotement à proximité de l'axe X2 d'articulation du genou 4c. Ainsi, lorsque la jambe 2 est dans sa position déployée, les lames 7' sont dans un état déformé voisin de leur état de repos et les extrémités 7.1' sont éloignées des extrémités 7.2' d'une première distance ; lorsque la jambe 2 est dans sa position repliée, les lames 7' ont flambé et sont dans un état déformé et les extrémités 7.1' sont éloignées des extrémités 7.2' d'une deuxième distance inférieure à la première distance. C'est le repliement de l'organe de verrouillage 6' qui provoque le rapprochement des extrémités 7.1' et 7.2' l'une de l'autre et donc le flambement des lames 7'. Les lames 7' travaillent ainsi élastiquement en compression et ont tendance à revenir vers leur état de repos, les extrémités 7.1', 7.2' tendant à s'écarter l'une de l'autre jusqu'à la première distance.

A cet effet, les première et deuxième extrémités 7.1', 7.2' de chaque lame 7' sont rivetées chacune à une ferrure 8 agencée pour être assemblée en rotation à une chape 9.1 fixée sur la bielle 4a ou à une chape 9.2 venue de matière avec la biellette 5a', de sorte que les lames 7' sont sensiblement droites lorsque les biellettes 5a', 5b' sont en position verrouillée (figures 5 et 6), et prennent prend une forme arquée lorsque la biellette 5b' pivote selon l'axe X6'.

Chacune des lames 7 forme ainsi un ressort à lame appliquant sur la biellette 5b' un effort pour amener les axes X2', X5', X6' d'articulation en position sensiblement alignée. La présence de deux lames 7' permet notamment de fournir une redondance en cas de défaillance de l'une des deux lames 7'.

L'actionneur de manœuvre est dimensionné pour briser l'alignement des axes X2', X5', X6' d'articulation en contrant l'effort exercé par les lames 7 résistant à leur propre flambement. La remontée du genou 5c' engendre le désalignement des bielles 4a, 4b, ce qui provoque la remontée du genou 4c et donc le pivotement de la jambe 2 vers la position rétractée.

L'effort engendré par les lames 7' après une faible déformation est suffisant pour assurer le maintien des biellettes 5a', 5b' en position verrouillée. L'effort n'évolue que très peu au fur et à mesure que la déformation augmente. Ainsi, lorsque la jambe 2 passe de la position déployée à la position rétractée, l'effort produit par les la lames 7' est limité, ce qui limite les efforts que doit contrer l'actionneur de manœuvre pour relever l'atterrisseur 1.

Bien entendu, l'invention n'est pas limitée au mode de réalisation décrit mais englobe toute variante entrant dans le champ de l'invention telle que définie par les revendications.

Le nombre, la forme et les dimensions des lames 7, 7' peuvent être différents de ceux illustrés aux figure 1a-1d, 5.

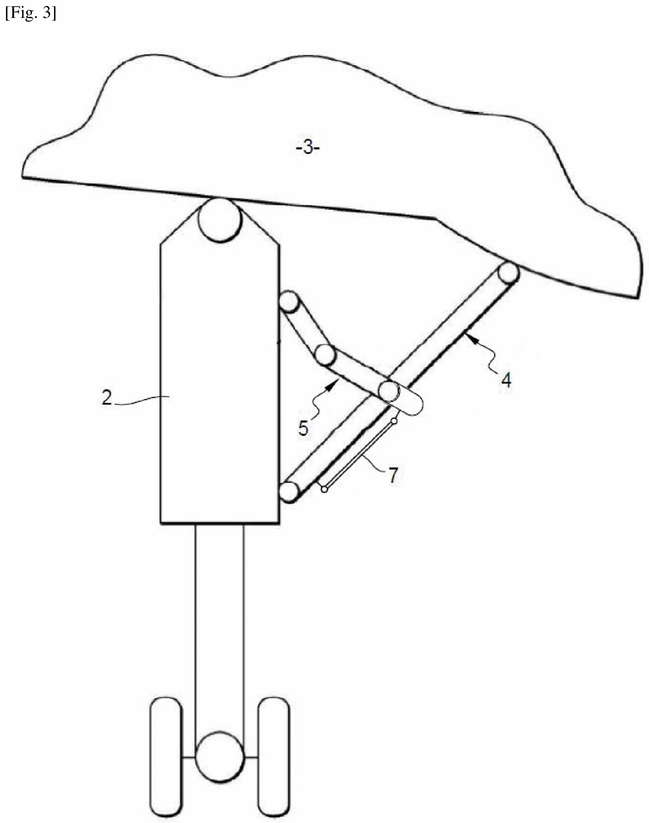

Bien qu'ici les lames 7, 7' s'étendent le long de la bielle 4a (montage dit « interne »), elles peuvent aussi s'étendre le long de la bielle 4b (montage dit « externe »). Les lames 7, 7' sont alors montées à pivotement sur l'organe de stabilisation 5, 5' et sur la bielle 4b de manière à travailler en compression (figure 3).

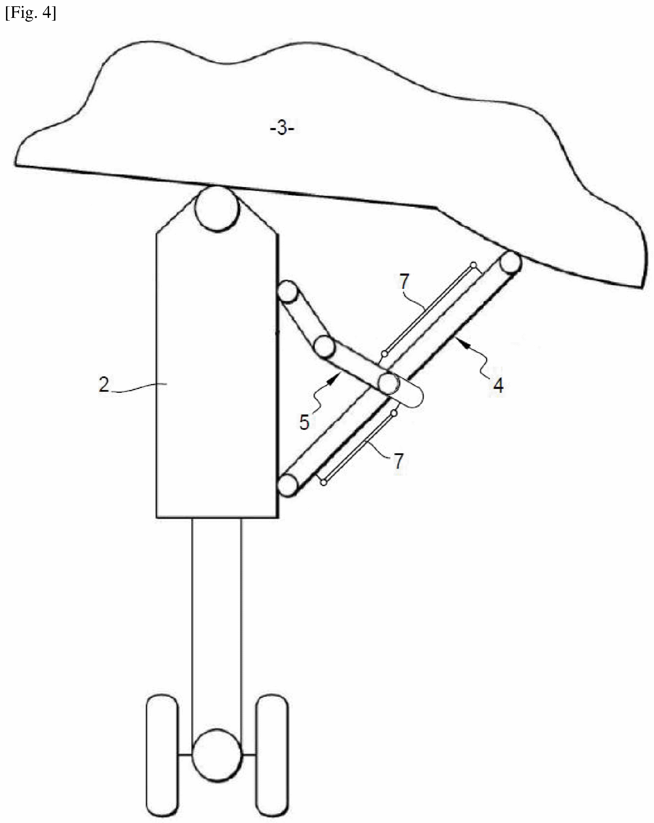

La stabilisation de la jambe 2 peut également cumuler l'action d'une ou plusieurs lames montées à pivotement le long de la bielle 4a avec celle d'une ou plusieurs lames montées à pivotement le long de la bielle 4b (figure 4).

Les lames 7, 7' peuvent être réalisées en tout matériau approprié (métal, composite...).

Les lames 7, 7' peuvent être montées à pivotement sur les bielles 4a, 4b et l'organe de stabilisation 5, 5' par tout moyen approprié.

Bien que la jambe 2 soit ici maintenue dans la position déployée par une unique contrefiche briseuse 4, l'invention peut également s'appliquer également aux atterrisseurs comprenant une jambe maintenue en position déployée par plusieurs contrefiches briseuses. Au moins l'une des contrefiches briseuses est alors équipée d'un organe de stabilisation comprenant au moins un ressort à lame.

## Revendications

1. Atterrisseur (1) d'aéronef comprenant :
- une jambe (2) agencée pour être montée mobile sur une structure (3) d'aéronef entre une position déployée et une position rétractée ;
- au moins un organe de contreventement (4) pour maintenir la jambe dans la position déployée, comportant une première bielle (4a) articulée sur la structure d'aéronef et une deuxième bielle (4b) articulée sur la première bielle et sur la jambe ;
- un organe de stabilisation (5, 5') pour maintenir les première et deuxième bielles (4a, 4b) en position alignée, comportant une première biellette (5a, 5a') et une deuxième biellette (5b, 5b') articulées entre elles et dont l'une au moins est articulée sur l'organe de contreventement ; et
- au moins un ressort pour rappeler élastiquement en position généralement alignée les articulations des première et deuxième biellettes ;
dans lequel le ressort est un ressort à lame (6, 6', 7, 7') agencé pour être soumis élastiquement à un effort (P) de compression axiale lorsque les articulations des première et deuxième biellettes quittent leur position généralement alignée, **caractérisé en ce que** le ressort a une première extrémité (7.1) montée à pivotement sur la première bielle ou la deuxième bielle, et une seconde extrémité (7.2) montée à pivotement sur l'organe de stabilisation.

2. Atterrisseur (1) selon la revendication 1, dans lequel le ressort à lame (6, 6', 7, 7') est monté à pivotement sur la première bielle (4a) et sur l'organe de stabilisation (5).

3. Atterrisseur (1) selon la revendication 1, dans lequel le ressort à lame (6, 6', 7, 7') est monté à pivotement sur la deuxième bielle (4b) et sur l'organe de stabilisation (5).

4. Atterrisseur (1) selon l'une quelconque des revendications précédentes, dans lequel le ressort à lame (6, 6', 7, 7') est une plaque de métal d'épaisseur sensiblement constante.

5. Atterrisseur (1) selon l'une quelconque des revendications précédentes, comprenant deux ressorts à lames (6, 6', 7, 7') pour fournir une redondance en cas de défaillance de l'un des deux ressorts à lame.

6. Atterrisseur (1) selon la revendication 5, dans lequel les deux ressorts à lames (6', 7') sont sensiblement identiques et sont montés à pivotement sur la première bielle (4a) et sur l'organe de stabilisation (5').

7. Atterrisseur (1) selon la revendication 5, dans lequel les deux ressorts à lames (6', 7') sont sensiblement identiques et sont montés à pivotement sur la deuxième bielle (4b) et sur l'organe de stabilisation (5').

8. Atterrisseur (1) selon la revendication 5, dans lequel l'un des ressorts à lame (6, 7) est monté à pivotement sur la première bielle (4a) et sur l'organe de stabilisation, et l'autre des ressorts à lame (6, 7) est monté à pivotement sur la deuxième bielle (4b) et sur l'organe de stabilisation.

9. Atterrisseur (1) selon la revendication 1, dans lequel la première biellette (5a) est articulée sur la jambe (2) et la deuxième biellette (5b) est articulée sur l'organe de contreventement (5).

10. Atterrisseur (1) selon la revendication 1, dans lequel la première biellette (5a') est articulée sur la deuxième bielle (4b) et la deuxième biellette (5b') est articulée sur la première bielle (4a).

11. Aéronef comprenant au moins un atterrisseur (1) selon l'une quelconque des revendications précédentes.

## Patentansprüche

1. Flugzeugfahrwerk (1) umfassend:
- ein Federbein (2), das ausgelegt ist, um beweglich an einer Flugzeugstruktur (3) zwischen einer ausgefahrenen und einer eingefahrenen Position angebracht zu werden;
- mindestens ein Auskreuzungselement (4) zum Halten des Federbeins in der ausgefahrenen Position, das eine erste Stange (4a), die an der Flugzeugstruktur angelenkt ist, und eine zweite Stange(4b) umfasst, die an der ersten Stange und am Federbein angelenkt ist;
- ein Stabilisierungselement (5, 5') zum Halten der ersten und zweiten Stange (4a, 4b) in einer gerichteten Position, umfassend eine erste Strebe (5a, 5a') und eine zweite Strebe (5b, 5b'), die gelenkig miteinander verbunden sind und von denen mindestens eine am Auskrezuzungselement angelenkt ist; und
- mindestens eine Feder, zum elastischen Zurückführen der Gelenke der ersten und zweiten Strebe in eine im Wesentlichen gerichtete Position;
wobei es sich bei der Feder um eine Blattfeder (6, 6', 7, 7') handelt, die so ausgelegt ist, dass sie elastisch einer axialen Druckkraft (P) ausgesetzt wird, wenn die Gelenke der ersten und zweiten Strebe ihre im Wesentlichen gerichtete Position verlassen, **dadurch gekennzeichnet, dass** die Feder ein erstes Ende (7.1) aufweist, das schwenkbar an der ersten oder der zweiten Stange angebracht ist, und ein zweites Ende (7.2), das schwenkbar am Stabilisierungselement angebracht ist.

2. Fahrwerk (1) nach Anspruch 1, wobei die Blattfeder (6, 6', 7, 7') schwenkbar an der ersten Stange (4a) und am Stabilisierungselement (5) angebracht ist.

3. Fahrwerk (1) nach Anspruch 1, wobei die Blattfeder (6, 6', 7, 7') schwenkbar an der zweiten Stange (4b) und am Stabilisierungselement (5) angebracht ist.

4. Fahrwerk (1) nach einem der vorstehenden Ansprüche, wobei es sich bei der Blattfeder (6, 6', 7, 7') um eine Metallplatte mit im Wesentlichen konstanter Dicke handelt.

5. Fahrwerk (1) nach einem der vorstehenden Ansprüche, umfassend zwei Blattfedern (6, 6', 7, 7'), um im Falle eines Ausfalls einer der beiden Blattfedern Redundanz zu gewährleisten.

6. Fahrwerk (1) nach Anspruch 5, wobei die beiden Blattfedern (6', 7') im Wesentlichen identisch sind und schwenkbar an der ersten Stange (4a) und am Stabilisierungselement (5') angebracht sind.

7. Fahrwerk (1) nach Anspruch 5, wobei die beiden Blattfedern (6', 7') im Wesentlichen identisch sind und schwenkbar an der zweiten Stange (4b) und am Stabilisierungselement (5') angebracht sind.

8. Fahrwerk (1) nach Anspruch 5, wobei eine der Blattfedern (6, 7) schwenkbar an der ersten Stange (4a) und am Stabilisierungselement angebracht ist und die andere der Blattfedern (6, 7) schwenkbar an der zweiten Stange (4b) und am Stabilisierungselement angebracht ist.

9. Fahrwerk (1) nach Anspruch 1, wobei die erste Strebe (5a) am Federbein (2) angelenkt ist und die zweite Strebe (5b) am Auskreuzungselement (5) angelenkt ist.

10. Fahrwerk (1) nach Anspruch 1, wobei die erste Strebe (5a') an der zweiten Stange (4b) angelenkt ist und die zweite Strebe (5b') an der ersten Stange (4a) angelenkt ist.

11. Flugzeug mit mindestens einem Fahrwerk (1) nach einem der vorstehenden Ansprüche.

## Claims

1. An aircraft undercarriage (1) comprising:
· a leg (2) arranged to be connected to an aircraft structure (3) to be movable between a deployed position and a retracted position;
· at least one brace member (4) for holding the leg in its deployed position and comprising a first rod (4a) hinged to the aircraft structure and a second rod (4b) hinged to the first rod and to the leg;
· a stabilizer member (5, 5') for holding the first and second rods (4a, 4b) in an aligned position and comprising a first link (5a, 5a') and a second link (5b, 5b') that are hinged to each other, with at least one of them being hinged to the brace member; and
· at least one spring for elastically urging the hinges of the first and second links into a generally aligned position;
wherein the spring is a spring blade (6, 6', 7, 7') arranged to be subjected elastically to an axial compression force (P) when the hinges of the first and second links leave their generally aligned position, the undercarriage being **characterized in that** the spring has a first end (7.1) pivotally mounted on the first or second rod, and a second end (7.2) pivotally mounted on the stabilizer member.

2. An undercarriage (1) according to claim 1, wherein the spring blade (6, 6', 7, 7') is pivotally connected to the first rod (4a) and to the stabilizer member (5).

3. An undercarriage (1) according to claim 1, wherein the spring blade (6, 6', 7, 7') is pivotally connected to the second rod (4b) and to the stabilizer member (5).

4. An undercarriage (1) according to any preceding claim, wherein the spring blade (6, 6', 7, 7') is a metal plate of substantially constant thickness.

5. An undercarriage (1) according to any preceding claim, including two spring blades (6, 6', 7, 7') in order to provide redundancy in the event of one of the two spring blades failing.

6. An undercarriage (1) according to claim 5, wherein the two spring blades (6', 7') are substantially identical and they are pivotally connected to the first rod (4a) and to the stabilizer member (5').

7. An undercarriage (1) according to claim 5, wherein the two spring blades (6', 7') are substantially identical and they are pivotally connected to the second rod (4b) and to the stabilizer member (5').

8. An undercarriage (1) according to claim 5, wherein one of the spring blades (6, 7) is pivotally connected to the first rod (4a) and to the stabilizer member, and the other spring blade (6, 7) is pivotally connected to the second rod (4b) and to the stabilizer member.

9. An undercarriage (1) according to claim 1, wherein the first link (5a) is hinged to the leg (2) and the second link (5b) is hinged to the brace member (5).

10. An undercarriage (1) according to claim 1, wherein the first link (5a') is hinged to the second rod (4b) and the second link (5b') is hinged to the first rod (4a).

11. An aircraft including at least one undercarriage (1) according to any preceding claim.
